# EUROPEAN PATENT APPLICATION

(11) **EP 4 661 204 A1**
(43) Date of publication of application: **10.12.2025**
(21) Application number: 23957131.8
(22) Date of filing: 31.10.2023
(51) Int. Cl.: H01M 50/593

(54) **BATTERY CELL, BATTERY AND ELECTRIC DEVICE**

(71) Applicant: Contemporary Amperex Technology Co., Limited, Ningde, Fujian 352100 (CN)
(72) Inventor: CHEN, Shengwang, Ningde, Fujian 352100 (CN); HUANG, Shaobin, Ningde, Fujian 352100 (CN); GUO, Zhijun, Ningde, Fujian 352100 (CN); WANG, Peng, Ningde, Fujian 352100 (CN)
(74) Representative: Ran, Handong
(86) International application number: PCT/CN2023/128565
(87) International publication number: WO 2025/091254

(57) **Abstract**

A battery cell, a battery and an electric device, which relate to the technical field of batteries. The battery cell comprises: a casing, which comprises a wall portion, the wall portion being provided with a first electrode lead-out member; an electrode component, which is accommodated in the casing, and comprises a body portion and a tab extending from the body portion; and a separator member, which is at least partially disposed between the first electrode lead-out member and the body portion, wherein the separator member comprises a separator plate, which is provided with a channel; the tab passes through the channel and is electrically connected to the first electrode lead-out member; the separator plate is provided with at least one through hole; and the through hole penetrates the separator plate in the direction of thickness of the separator plate. The technical solution of the embodiments of the present application is conducive to reducing the risk of the accumulation of an electrolyte in the separator member, thereby facilitating the full utilization of the electrolyte.

## Description

### TECHNICAL FIELD

The present application relates to the technical field of batteries, and in particular, to a battery cell, a battery, and an electric device.

### BACKGROUND

With the increasing severity of environmental pollution, the new energy industry has attracted more and more attention. In the new energy industry, battery technology is an important factor in its development.

Battery technology advancement requires consideration of various design factors, such as energy density, cycle life, and reliability. A battery cell includes a separation member disposed between an end cover assembly and a tab of the electrode assembly to facilitate the connection between the tab and an electrode lead-out member of the end cover assembly in the battery cell. However, electrolyte tends to accumulate on the separation member, which is not conducive to full utilization of the electrolyte. Therefore, how to provide a separation member to reduce the risk of electrolyte accumulation in the separation member and achieve full utilization of the electrolyte is an urgent technical problem that needs to be solved.

### SUMMARY

The present application provides a battery cell, a battery, and an electric device, which can reduce the risk of electrolyte accumulation in the separation member and achieve full utilization of the electrolyte.

In a first aspect, provided is a battery cell. The battery cell includes: a shell, including a wall part, where the wall part is provided with a first electrode lead-out member; an electrode assembly, accommodated in the shell, where the electrode assembly includes a main body part and a tab extending from the main body part; and a separation member, at least partially disposed between the first electrode lead-out member and the main body part, where the separation member includes a separation plate, the separation plate is provided with a channel, and the tab passes through the channel and is electrically connected to the first electrode lead-out member. The separation plate is provided with at least one through hole, and the through hole penetrates through the separation plate along a thickness direction of the separation plate.

In the embodiments of the present application, the separation member can insulate and separate at least a part of the tab passing through the channel from the main body part of the electrode assembly, thereby reducing the risk of the tab being inserted into the main body part and reducing the risk of short circuit in the battery cell when the battery cell is subjected to impacts or other conditions. The separation member includes a separation plate, the separation plate is provided with at least one through hole, and the through hole penetrates through the separation plate along the thickness direction of the separation plate. In this way, the electrolyte can flow out of the separation member through the through hole, thereby reducing the risk of electrolyte accumulation in the separation member and facilitating full utilization of the electrolyte. Therefore, the technical solutions of the embodiments of the present application can reduce the risk of electrolyte accumulation in the separation member and facilitate full utilization of the electrolyte.

In a possible implementation, the separation member further includes a side plate, the side plate surrounds an outer side of the separation plate, and the side plate protrudes from a side of the separation plate facing away from the main body part to jointly define an accommodating recess with the separation plate; and at least a part of the tab is accommodated in the accommodating recess. In this way, at least a part of the tab can be accommodated in the accommodating recess, thereby facilitating the connection between the tab and the electrode lead-out member.

In a possible implementation, the through hole is disposed at a position of the separation plate proximal to the side plate. In this way, the through hole is closer to the edge of the separation member, which facilitates the outflow of the electrolyte through the through hole, thereby further reducing the risk of electrolyte accumulation in the separation member.

In a possible implementation, the separation plate includes an inclined plate and a connecting plate connecting the inclined plate and the side plate, and the inclined plate includes an inclined surface facing away from the main body part; along the thickness direction, a minimum distance between one end of the inclined surface proximal to the channel and the main body part is greater than a minimum distance between one end of the inclined surface distal to the channel and the main body part; and the connecting plate is provided with at least one through hole.

By providing the inclined surface, the gap between the separation plate and the tab can be reduced. This helps limit and shape the tab through the separation plate, contributing to maintaining the morphology of the tab. By providing at least one through hole on the connecting plate, the through hole is closer to the edge of the separation member, which facilitates the outflow of the electrolyte from the separation member.

In a possible implementation, the separation member further includes: an opening structure, the opening structure being disposed in an end part region of the separation plate along a first direction and extending from a surface of the separation plate facing away from the main body part toward a direction close to the wall part, the first direction being a length direction of the separation plate; and a connecting part, the connecting part being connected to an outer side wall of the opening structure and extending to the side plate along a direction away from the opening structure. The outer side wall, the connecting part, the side plate, and the separation plate define, in an enclosing manner, a first recess space, and a region of the separation plate opposite to the first recess space is provided with at least one through hole.

In the above technical solution, by providing the connecting part connected to the outer side wall of the opening structure and extending along a direction away from the opening structure, the connecting part can distribute the force applied to the opening structure and provide certain reinforcement for the opening structure. This reduces the risk of deformation of the opening structure under external forces, thereby reducing the risk of tearing of the tab due to the deformation of the opening structure, and thus improving the reliability of the battery cell. In addition, the outer side wall, the connecting part, the side plate, and the separation plate define, in an enclosing manner, the first recess space. The first recess is a relatively enclosed space, and is more prone to electrolyte accumulation. By providing at least one through hole in the region of the separation plate opposite to the first recess space, the electrolyte can flow out of the first recess space from the through hole, thereby reducing the risk of electrolyte accumulation in the first recess space.

In a possible implementation, an extension direction of the connecting part passes through the center of the opening structure. In this way, the connecting part has a relatively long length, thereby providing better structural reinforcement for the opening structure, and further reducing the risk of deformation of the opening structure.

In a possible implementation, the side plate includes two long side walls and two short side walls, the two long side walls are located respectively on two sides of the separation plate along a second direction, and the two short side walls are located respectively on two sides of the separation plate along the first direction, the second direction being a width direction of the separation plate; end parts of two connecting parts proximal to the opening structure are connected separately to the outer side wall of the opening structure, end parts of the two connecting parts distal to the opening structure are connected separately to the two long side walls, and the two connecting parts, the two long side walls, one short side wall of the two short side walls, and the separation plate define, in an enclosing manner, two first recess spaces.

In the above technical solution, the two connecting parts, the two long side walls, one short side wall, and the separation plate define, in an enclosing manner, two first recess spaces, and a position of the separation plate corresponding to the first recess space is provided with at least one through hole. In this way, the electrolyte in the two first recess spaces can flow out through the through hole, thereby reducing the risk of electrolyte accumulation in the first recess spaces.

In a possible implementation, the two connecting parts are symmetrically disposed along the first direction. In this way, a smaller number of connecting parts can provide greater support and reinforcement for the opening structure.

In a possible implementation, along the thickness direction of the separation plate, a dimension h1 of the connecting part and a dimension h2 of the opening structure satisfy: 0.5h2 ≤ h1 ≤ h2.

In the case of h1 ≥ 0.5h2, the connecting part has a relatively appropriate dimension along the thickness direction, thereby providing support and reinforcement for the opening structure; and in the case of h1 ≤ h2, along the thickness direction, the connecting part does not extend beyond the opening structure, which can reduce the risk of interference between the connecting part and other components in the battery cell.

In a possible implementation, a thickness t of the connecting part satisfies: 0.4 mm ≤ t ≤ 2 mm.

In the case of t ≥ 0.4 mm, the connecting part has an appropriate thickness, thereby providing better support and reinforcement for the opening structure; and in the case of t ≤ 2 mm, the manufacturing of the connecting part is facilitated, reducing the risk of surface unevenness of the connecting part and thickness nonuniformity at different positions of the connecting part.

In a possible implementation, along the second direction, a distance L between the through hole and the side plate satisfies: 0 mm ≤ L ≤ 1 mm, the second direction being the width direction of the separation plate. In the case of L ≤ 1 mm, the outflow of the electrolyte through the through hole is facilitated; and in the case of L ≥ 0 mm, an appropriate distance is ensured between the through hole and the side plate, facilitating the manufacturing of the through hole.

In a possible implementation, a cross-sectional area S of the through hole satisfies: 0.19 mm2 ≤ S ≤ 20 mm2. In the case of S ≤ 20 mm2, the cross-sectional area of the through hole is not excessively large, thereby allowing the separation member to exhibit relatively high structural strength; and in the case of S ≥ 0.19 mm2, the cross-sectional area of the through hole is not excessively small, thereby facilitating the outflow of the electrolyte through the through hole. Therefore, with the above configuration, it is possible to facilitate the outflow of the electrolyte from the separation member while maintaining the structural strength of the separation member.

In a possible implementation, the separation plate includes a first sub-separation plate and a second sub-separation plate that are spaced apart, and the channel is formed between the first sub-separation plate and the second sub-separation plate. In this way, the first sub-separation plate and the second sub-separation plate are disposed opposite to each other along the second direction, the second direction being the width direction of the separation member. The first sub-separation plate and the second sub-separation plate can limit the tab (for example, a part of the tab located between the end surface and the separation plate), to reduce shaking and deformation of the tab.

In a possible implementation, a shape of the through hole is circular. In this way, the manufacturing of the through hole is facilitated, and the manufacturing complexity of the separation member is reduced.

In a possible implementation, a diameter D of the through hole satisfies: 0.5 mm ≤ D ≤ 5 mm. In the case of D ≤ 5 mm, the dimension of the through hole is not excessively large, thereby allowing the separation member to exhibit relatively high structural strength; and in the case of D ≥ 0.5 mm, the dimension of the through hole is not excessively small, thereby facilitating the outflow of the electrolyte through the through hole. Therefore, with the above configuration, it is possible to facilitate the outflow of the electrolyte from the separation member while maintaining the structural strength of the separation member.

In a possible implementation, the shell includes a shell body and a first end cover assembly, the first end cover assembly is configured to lid an opening at one end of the shell body, the first end cover assembly is provided with a protruding structure, and the protruding structure is snap-fitted to the opening structure.

In the above technical solution, the opening structure of the separation member can be snap-fitted to the protruding structure of the first end cover assembly to facilitate the fixation between the separation member and the first end cover assembly. In this way, the fixation between the separation member and the first end cover assembly is facilitated, reducing the risk of tearing of the tab due to the movement of the separation member.

In a possible implementation, the first end cover assembly includes an end cover and an insulating member, the end cover is configured to lid the opening at one end of the shell body, the insulating member is provided with the protruding structure, and the end cover is the wall part.

In the above technical solution, the end cover lids the opening at one end of the shell body. In addition, the first electrode lead-out member on the end cover is electrically connected to the tab, and the protruding structure of the insulating member is snap-fitted to the opening structure of the separation member. By providing the first end cover assembly, the connection between the first end cover assembly, the separation member, and the electrode assembly is facilitated.

In a possible implementation, the shell further includes a second end cover assembly, the second end cover assembly being configured to lid an opening at another end of the shell body. In this way, the first end cover assembly and the second end cover assembly are respectively configured to lid the openings at the two ends of the shell body, thereby facilitating the sealing of the shell body.

In a possible implementation, the battery cell further includes: an insulating film, the insulating film being sleeved over an outer surface of the electrode assembly and disposed on an inner side of the shell. In this way, the electrode assembly can be separated from the shell to reduce the risk of short circuit caused by the contact between the electrode assembly and the shell. In addition, the separation member can also be connected to the electrode assembly through the insulating film, thereby facilitating the assembly of the battery cell.

In a possible implementation, the battery cell further includes: a side support plate, the side support plate being disposed between the electrode assembly and the inner side of the shell. The side support plate can provide support to the electrode assembly. In addition, the electrode assembly and the separation member can also be connected through the side support plate, thereby facilitating the assembly of the battery cell.

In a second aspect, provided is a battery. The battery includes the battery cell according to the first aspect and any one of the possible implementations thereof.

In a third aspect, provided is an electric device. The electric device includes the battery according to the second aspect.

In the embodiments of the present application, the separation member can insulate and separate at least a part of the tab passing through the channel from the main body part of the electrode assembly, thereby reducing the risk of the tab being inserted into the main body part and reducing the risk of short circuit in the battery cell when the battery cell is subjected to impacts or other conditions. The separation member includes a separation plate, the separation plate is provided with at least one through hole, and the through hole penetrates through the through hole along the thickness direction of the separation plate. In this way, the electrolyte can flow out of the separation member through the through hole, thereby reducing the risk of electrolyte accumulation in the separation member and facilitating full utilization of the electrolyte. Therefore, the technical solutions of the embodiments of the present application can reduce the risk of electrolyte accumulation in the separation member and facilitate full utilization of the electrolyte.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery cell according to an embodiment of the present application;
FIG. 4 is a schematic exploded view of a battery cell according to an embodiment of the present application;
FIG. 5 is a three-dimensional schematic structural diagram of a separation member according to an embodiment of the present application;
FIG. 6 is a top view of a separation member according to an embodiment of the present application;
FIG. 7 is a cross-sectional view of the separation member in FIG. 6 along the A-A direction;
FIG. 8 is an enlarged schematic diagram of region E of the separation member in FIG. 6;
FIG. 9 is a schematic structural diagram of a first end cover assembly according to an embodiment of the present application;
FIG. 10 is a schematic structural diagram of region B of the battery cell in FIG. 3; and
FIG. 11 is an enlarged schematic diagram of region C in FIG. 10.

The drawings are not drawn to scale.

Reference numerals:
1: vehicle; 10: battery; 30: controller; 40: motor; 3: case.
2: battery cell; 20: shell; 21: shell body; 22: electrode assembly; 23: separation member; 24: first end cover assembly; 25: second end cover assembly; 26: insulating film; 27: side support plate.
211: first opening; 212: second opening.
221: body part; 222: tab; 2221: end surface.
230: side plate; 231: opening structure; 232: connecting part; 233: separation plate; 2330: channel; 2350: accommodating recess; 2351: first recess space; 2331: inclined plate; 2332: connecting plate; 2331a: inclined surface; 2311: outer side wall; 2301: long side wall; 2302: short side wall; 233a: first sub-separation plate; 233b: second sub-separation plate; 2310: second fixing part; 2312: guiding part; 2313: slot part.
241: protruding structure; 242: first electrode lead-out member; 2411: first fixing part; 2412: transition part; 2413: snap part; 243: end cover; 244: insulating member; 251: second electrode lead-out member.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus should not be construed as limitations to the present application. Furthermore, the terms "first", "second", "third", and the like are used for descriptive purposes only and should not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" shall be construed broadly and may be, for example, fixed connection, detachable connection, or integral connection, or direct connection or indirect connection via an intermediate. For those of ordinary skill in the art, the specific meaning of the above terms in the present application may be interpreted according to the specific condition.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into cylindrical battery cells and prismatic and square battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery pack, or the like. The battery generally includes a case used to encapsulate one or a plurality of battery cells. The case can prevent liquid or other foreign matters from affecting the charging or discharging of the battery cells.

A battery cell includes an electrode assembly and an electrolyte. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like. In addition, the electrode assembly may be a wound structure or a stacked structure, but the embodiments of the present application are not limited thereto.

To meet different power requirements, the battery may include a plurality of battery cells. The plurality of battery cells may be connected in series, in parallel, or in series-parallel. The series-parallel connection refers to a combination of series connection and parallel connection. Optionally, the plurality of battery cells may be first connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into a battery module, which is then assembled into a battery. The battery is further disposed in an electric device to provide electrical energy to the electric device.

Battery technology advancement requires consideration of various design factors at the same time, such as energy density, cycle life, discharge capacity, charging and discharging rate, and reliability. The structure of the battery cell is crucial to the performance of the battery cell. The battery cell includes an electrode assembly, a separation member, and a shell, where the shell is configured to accommodate the electrode assembly, a wall part of the shell is provided with an electrode lead-out member, and the separation member is configured to support a tab of the electrode assembly to facilitate the electrical connection between the tab and the electrode lead-out member of the shell. However, the electrolyte tends to accumulate in the separation member, which is not conducive to full utilization of the electrolyte.

In view of this, the embodiments of the present application provide a battery cell. The separation member in the battery cell includes a separation plate, and the separation plate is provided with at least one through hole penetrating through the separation plate. In this way, the electrolyte can flow out of the separation member through the through hole, thereby reducing the risk of electrolyte accumulation in the separation member and achieving full utilization of the electrolyte.

The technical solutions described in the embodiments of the present application are applicable to various apparatuses that use batteries, such as mobile phones, portable devices, laptops, electric bicycles, electric toys, electric tools, electric vehicles, ships, and spacecraft. For example, the spacecraft includes an airplane, a rocket, a space shuttle, and a spaceship.

It is to be understood that the technical solutions described in the embodiments of the present application are not limited to the devices described above, but are applicable to all devices that use batteries. However, for the sake of brevity, the following embodiments are illustrated using electric vehicles as examples.

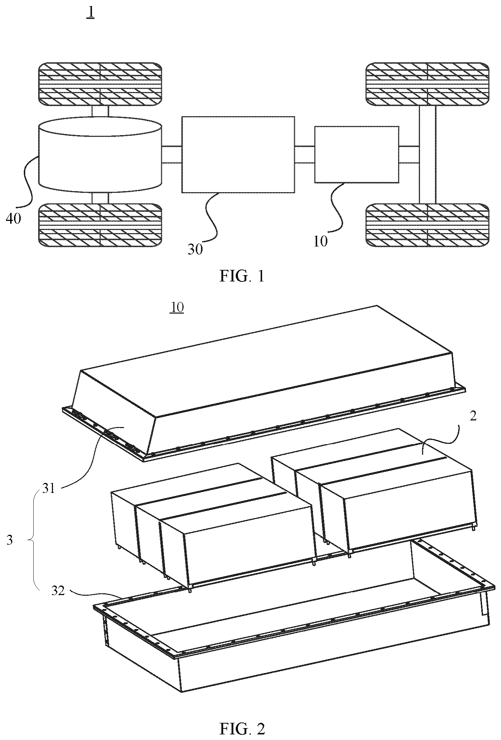

For example, FIG. 1 is a schematic structural diagram of a vehicle according to one embodiment of the present application. The vehicle 1 may be a fuel vehicle, a gas vehicle, or a new energy vehicle. The new energy vehicle may be a pure electric vehicle, a hybrid vehicle, or an extended-range vehicle. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be used to supply power to the vehicle 1. For example, the battery 10 may serve as an operation power source for the vehicle 1 and is used in a circuit system of the vehicle 1, for example, for operation power needed for starting, navigating, and driving of the vehicle 1. In another embodiment of the present application, the battery 10 may not only serve as an operation power source for the vehicle 1, but also serve as a driving power source for the vehicle 1 to, instead of or in part instead of fuel or natural gas, provide driving power for the vehicle 1.

To meet different power usage requirements, the battery 10 may include a plurality of battery cells. For example, FIG. 2 is a schematic structural diagram of a battery according to one embodiment of the present application. The battery 10 may include a plurality of battery cells 2. The battery 10 may further include a case 3, and the interior of the case 3 is a hollow structure. The plurality of battery cells 2 are accommodated in the case 3. For example, the plurality of battery cells 2, after being connected in parallel, in series, or in series-parallel connection, are disposed inside the case 3. The case 3 may include a first case 31 and a second case 32. The first case 31 and the second case 32 are lidded with each other to form the case 3. The first case 31 and the second case 32 may both be hollow structures with an opening at one end. Alternatively, the first case 31 may be a plate-shaped structure, while the second case 32 may be a hollow structure with an opening at one end.

Optionally, the battery 10 may further include other structures, which are not described in detail herein. For example, the battery 10 may further include a busbar component, and the busbar component is configured to achieve electrical connection among the plurality of battery cells 2, such as in parallel, in series, or in series-parallel connection. Specifically, the busbar component may achieve electrical connection among the battery cells 2 by connecting to the electrode lead-out members of the battery cells 2. Further, the busbar component may be fixed to the electrode lead-out member of the battery cells 2 by welding. The electrical energy of the plurality of battery cells 2 can be further conducted through a conductive mechanism passing through the case 3. Optionally, the conductive mechanism may also belong to the busbar component.

Based on different power requirements, the number of the battery cells 2 may be set to any numerical value. The plurality of battery cells 2 may be connected in series, in parallel, or in series-parallel connection to achieve a higher capacity or power. Since each battery 10 may include a relatively large number of the battery cells 2, the battery cells 2 may be arranged in groups for ease of mounting, with each group of the battery cells 2 forming a battery module. The number of the battery cells 2 included in the battery module is not limited and may be set according to requirements. The battery may include a plurality of battery modules. The plurality of battery modules may be connected in series, in parallel, or in series-parallel connection.

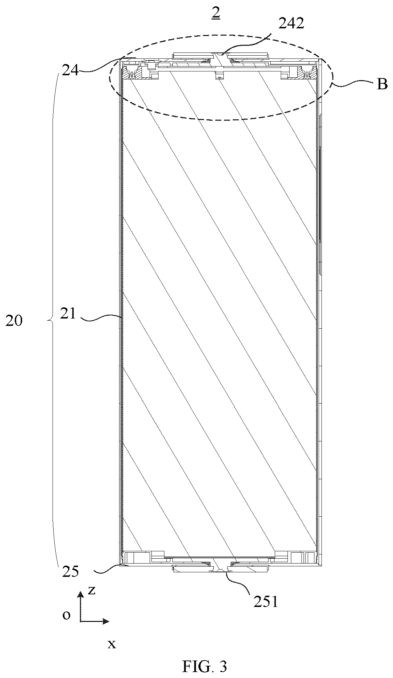

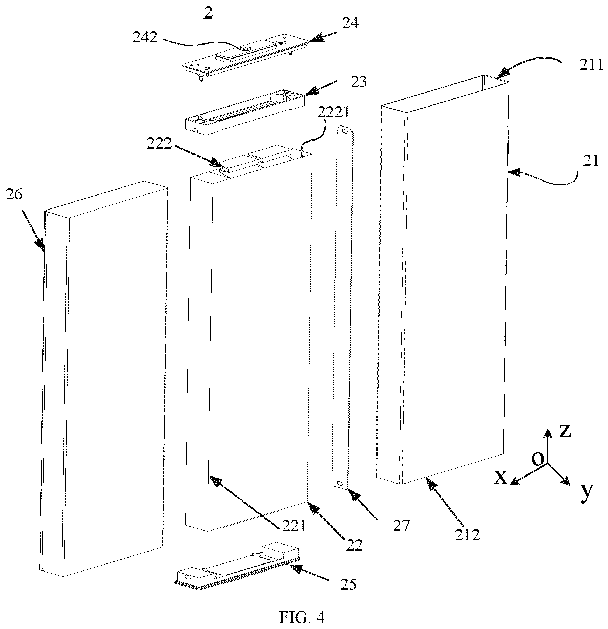

FIG. 3 is a schematic structural diagram of a battery cell according to an embodiment of the present application, and FIG. 4 is a schematic exploded structure view of a battery cell according to an embodiment of the present application. For example, as shown in FIGs. 3 and 4, the embodiments of the present application provide a battery cell 2. The battery cell includes: a shell 20, an electrode assembly 22, and a separation member 23.

The shell 20 includes a wall part, and the wall part is provided with a first electrode lead-out member 242.

The shell 20 is configured to accommodate the electrode assembly 22, where the shape of the shell 20 can be determined according to the shape of one or more electrode assemblies 22 after combination. For example, as shown in FIG. 4, the shell 20 is a hollow rectangular parallelepiped. The embodiments of the present application include but are not limited thereto. The shell 20 may further be a hollow cube, a hollow cylinder, or other shapes.

The shell 20 may be made of various materials. For example, the shell 20 may be made of metal or plastic. As some examples, the shell 20 may be made of copper, iron, aluminum, steel, aluminum alloy, or the like.

The shell 20 may have six outer walls. The wall part of the shell 20 may refer to one outer wall of the shell 20, and the wall part is disposed corresponding to the separation member 23.

The wall part is provided with a first electrode lead-out member 242, and the first electrode lead-out member 242 is configured to electrically connect the electrode assembly 22 to a circuit outside the battery cell 2 to achieve charging and discharging of the electrode assembly 22. As an example, at least a part of the first electrode lead-out member 242 is exposed to the outside of the battery cell 2 to facilitate connection with the busbar component, thereby leading out the electrical energy generated by the electrode assembly 22.

The electrode assembly 22 is accommodated in the shell 20, and the electrode assembly 22 includes a main body part 221 and a tab 222 extending from the main body part 221.

One end of the main body part 221 has an end surface 2221, and the tab 222 extends from the end surface 2221.

The tab 222 can be directly connected to the first electrode lead-out member 242, or can be indirectly connected to the first electrode lead-out member 242 via other conductive structures.

A plurality of tabs 222 may be provided. The plurality of tabs 222 include a positive electrode tab and a negative electrode tab. The positive electrode tab and the negative electrode tab may be led out from the same end of the main body part 221, or may be respectively led out from two opposite ends of the main body part 221 along the thickness direction of the wall part.

The tab 222 may include a plurality of tab layers, the plurality of tab layers being stacked together to form the tab 222. The tab 222 may include at least two parts. One part is located between the main body part 221 and the separation member 23, and another part is located between the separation member 23 and the first electrode lead-out member 242.

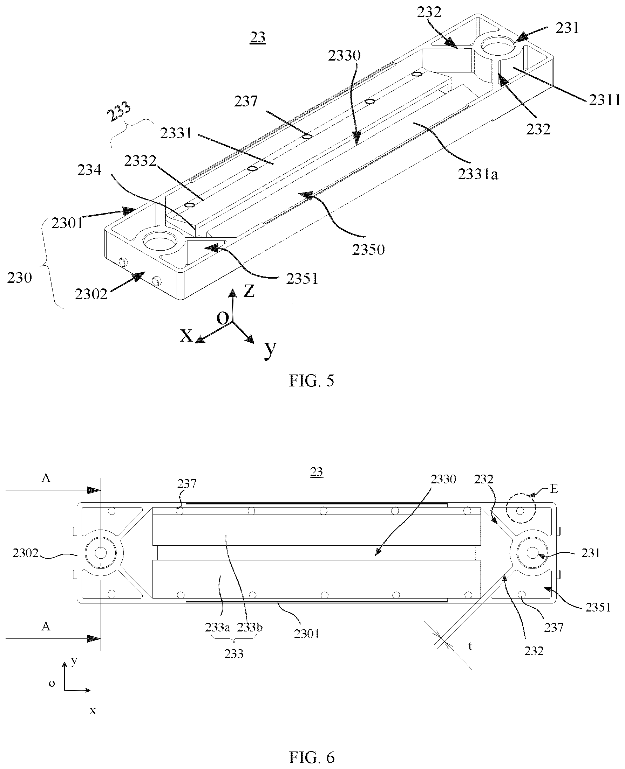

FIG. 5 is a three-dimensional schematic structural diagram of a separation member according to an embodiment of the present application. FIG. 6 is a top view of a separation member according to an embodiment of the present application. With reference to FIGs. 4 to 6, the separation member 23 is at least partially disposed between the first electrode lead-out member 242 and the main body part 221.

The separation member 23 may be partially disposed between the first electrode lead-out member 242 and the main body part 221, or may be entirely disposed between the first electrode lead-out member 242 and the main body part 221.

The separation member 23 may be of an integrated structure or a split-type structure. As an example, the separation member 23 is formed by connecting a plurality of independently formed parts. As another example, the separation member 23 is integrally formed by punching.

The separation member 23 includes a separation plate 233, the separation plate 233 being provided with a channel 2330. The tab 222 passes through the channel 2330 and is electrically connected to the first electrode lead-out member 242.

The separation plate 233 may be of an integrated structure or a split-type structure. The separation plate 233 can insulate and separate at least a part of the tab 222 passing through the channel 2330 from the end surface 2221 of the main body part 221.

The separation member 23 is at least partially disposed between the first electrode lead-out member 242 and the main body part 221, and the separation member 23 can insulate and separate at least a part of the tab 222 passing through the channel 2330 from the end surface 2221 of the main body part 221, such that when the battery cell 2 is affected by external impact, vibration, or the like, the risk of the tab 222 being inserted into the main body part 221 is reduced, thereby reducing the risk of short circuit in the battery cell 2, which is conducive to improving the reliability of the battery cell 2.

As an example, the separation plate 233 is of an integrated structure, that is, the separation plate 233 may be of a rectangular plate-shaped structure. The length of the separation plate 233 along the length direction (for example, the x direction in FIG. 5) of the separation member 23 is the same or substantially the same as the length of the separation member 23.

The separation plate 233 is provided with at least one through hole 237, the through hole 237 penetrating through the separation plate 233 along the thickness direction of the separation plate 233.

The at least one through hole 237 may include one, two, three, or more through holes 237.

For example, as shown in FIGs. 3 and 4, the thickness direction of the separation plate 233 is the z direction. The thickness direction of the separation plate 233 may also be referred to as the height direction of the separation member 23. The thickness direction of the separation plate 233 may be perpendicular to the width direction and the length direction of the separation plate 233.

The electrolyte can flow out of the separation member 23 through the through hole 237, thereby reducing the risk of electrolyte accumulation in the separation member 23 and achieving full utilization of the electrolyte.

The configuration of the electrolyte in the battery cell 2 is crucial to the performance of the battery cell 2, such as cycle performance. By providing the battery cell including the above separation member 23, the risk of electrolyte accumulation in the separation member 23 is reduced, such that the electrolyte can flow out of the separation member 23 to provide more electrolyte for the electrode assembly 22, thereby achieving full utilization of the electrolyte and improving the performance of the battery cell 2.

In the embodiments of the present application, the separation member 23 can insulate and separate at least a part of the tab 222 passing through the channel 2330 from the main body part 221 of the electrode assembly 22, thereby reducing the risk of the tab 222 being inserted into the main body part 221 and reducing the risk of short circuit in the battery cell 2 when the battery cell 2 is subjected to impacts or other conditions. The separation member 23 includes a separation plate 233, and the separation plate 233 is provided with at least one through hole 237 penetrating through the separation plate 233 along the thickness direction of the separation plate 233. In this way, the electrolyte can flow out of the separation member 23 through the through hole 237, thereby reducing the risk of electrolyte accumulation in the separation member 23 and facilitating full utilization of the electrolyte. Therefore, the technical solutions of the embodiments of the present application can reduce the risk of electrolyte accumulation in the separation member 23 and facilitate full utilization of the electrolyte.

In some embodiments, the separation member 23 further includes a side plate 230, the side plate 230 surrounds the outer side of the separation plate 233, and the side plate 230 protruding from the side of the separation plate 233 facing away from the main body part 221 to jointly define an accommodating recess with the separation plate 233; and at least a part of the tab 222 is accommodated in the accommodating recess 2350.

The part of the tab 222 passing through the channel 2330 is accommodated in the accommodating recess 2350, thereby facilitating the connection between the tab 222 and the first electrode lead-out member 242.

As an example, the separation member 23 is in the shape of a rectangular parallelepiped or substantially in the shape of a rectangular parallelepiped. In this way, the side plate 230 may include two long side walls 2301 with a longer length and two short side walls 2302 with a shorter length, the long side walls 2301 and the short side walls 2302 being connected sequentially.

In the embodiments, the accommodating recess 2350 is prone to electrolyte accumulation. By providing the through hole 237 on the separation plate 233, the risk of electrolyte accumulation in the accommodating recess 2350 can be reduced.

In some embodiments, the through hole 237 is disposed at a position of the separation plate 233 proximal to the side plate 230.

As an example, the separation plate 233 is connected to the long side wall 2301. Along the second direction, the through hole 237 is disposed at one end of the separation plate 233 proximal to the long side wall 2301, the second direction being the width direction of the separation plate 233. That is, the minimum distance between the through hole 237 and one end of the separation plate 233 distal to the long side wall 2301 (or one end of the separation plate 233 proximal to the channel 2330) is greater than 0.

As another example, the separation plate 233 is connected to the short side wall 2302. Along the first direction, the through hole 237 is disposed at one end of the separation plate 233 proximal to the short side wall 2302.

In the embodiments, the through hole 237 is closer to the edge of the separation member 23. Compared to the through hole 237 being disposed closer to the middle position of the separation member 23, the above arrangement of the through hole 237 can be applied to more placement configurations of the separation member 23 and placement configurations of the battery cell 2. That is, for the separation member 23 or the battery cell 2 with various placement configurations, the above position arrangement of the through hole 237 facilitates the discharge of the electrolyte from the separation member 23 through the through hole 237. In this way, the outflow of the electrolyte through the through hole 237 is facilitated, thereby further reducing the risk of electrolyte accumulation in the separation member 23.

In some embodiments, the separation plate 233 includes an inclined plate 2331 and a connecting plate 2332 connecting the inclined plate 2331 and the side plate 230, the inclined plate 2331 including an inclined surface 2331a facing away from the main body part 221; along the thickness direction, the minimum distance between one end of the inclined surface 2331a proximal to the channel 2330 and the main body part 221 is greater than the minimum distance between one end of the inclined surface 2331a distal to the channel 2330 and the main body part 221; and the connecting plate 2332 is provided with at least one through hole 237.

The inclined plate 2331 is provided with two surfaces opposite to each other along the thickness direction thereof, where one surface is the inclined surface 2331a facing away from the main body part 221, and the other surface is an inclined surface facing the main body part 221.

The tab 222 includes a plurality of tab layers, the plurality of tab layers being processed to form the tab 222. A plurality of tab layers of the part of the tab 222 located between the separation member 23 and the main body part 221 form a tab inclined surface after being gathered. By providing the inclined surface 2331a of the inclined plate 2331, the gap between the tab 222 and the separation plate 233 can be reduced. This helps limit and shape the tab through the separation plate 233, contributing to maintaining the morphology of the tab 222.

The connecting plate 2332 is closer to the side plate 230 compared to the inclined plate 2331. Providing the through hole 237 on the connecting plate 2332 is more conducive to the outflow of the electrolyte, which can further reduce the risk of electrolyte accumulation in the separation member 23.

In some embodiments, with reference to FIG. 5, the separation member 23 further includes a vertical plate 234, and two ends of the vertical plate 234 along the z direction are respectively connected to the inclined plate 2331 and the bottom surface of the separation member 23.

In some embodiments, the dimension of the inclined plate 2331 along the first direction is smaller than the overall dimension of the separation plate 233 along the first direction (or in other words, the dimension of the inclined plate 2331 along the first direction is smaller than the dimension of the separation member 23 along the first direction). That is, in the embodiments, along the first direction, in addition to the inclined plate 2331, the separation plate 23 further includes other plate-shaped structures. There is a certain height difference between the inclined plate 2331 and the other plate-shaped structures along the z direction (or in other words, the inclined plate 2332 protrudes toward the direction of the first electrode lead-out member 242 relative to the other plate-shaped structures, and the other plate-shaped structures may form at least a part of the bottom surface of the separation member 23).

In some embodiments, the separation member 23 further includes: an opening structure 231 and a connecting part 232.

The opening structure 231 is disposed in an end part region of the separation plate 233 along the first direction and extends from the surface of the separation plate 233 facing away from the main body part 221 toward the direction close to the wall part, the first direction being the length direction of the separation plate 233. For example, with reference to FIGs. 5 and 6, the first direction is the x direction.

The end part region is the region closer to the end part relative to the middle region.

The opening structure 231 may be disposed at one end of the separation member 23 along the first direction, or may be disposed at two ends of the separation member 23 along the first direction. That is, the separation member 23 may be provided with one opening structure 231, or may be provided with two opening structures 231.

The opening structure 231 may cooperate with the structure of the wall part of the shell 20 provided with the first electrode lead-out member 242 to achieve fixation between the separation member 23 and the shell 20. The opening structure 231 may be a groove or a hole.

The cross section of the opening structure 231 may be circular, square, or polygonal. The opening structure 231 has a certain dimension along the thickness direction of the separation member 23, that is, the opening structure 231 has a certain depth. In other words, the opening structure 231 is a structure with a certain volume.

The opening structure 231 has an outer side wall 2311 and an inner side wall, the inner side wall faces the opening of the opening structure 231, and the outer side wall 2311 faces away from the opening of the opening structure 231.

For example, in the case where the cross section of the opening structure 231 is circular, the opening structure 231 has a cylindrical outer side wall 231; and in the case where the cross section of the opening structure 231 is square, the opening structure 231 has a prismatic outer side wall 231.

The connecting part 232 is connected to the outer side wall 2311 of the opening structure 231 and extends to the side plate 230 along the direction away from the opening structure 231.

As an example, the connecting part 232 extends along the second direction, and the connecting part 232 extends from the outer side wall 2311 to the long side wall 2301.

As another example, with reference to FIGs. 5 and 6, the extension direction of the connecting part 232 forms a certain included angle with both the first direction and the second direction. That is, the connecting part 232 is disposed obliquely, and the connecting part 232 extends from the outer side wall 2311 to the long side wall 2301 of the side plate 230.

By providing the connecting part 232 connected to the outer side wall 2311 of the opening structure 231 and extending along the direction away from the opening structure 231, the connecting part 232 can distribute the force applied to the opening structure 231 and provide certain reinforcement for the opening structure 231. This reduces the risk of deformation of the opening structure 231 under external forces, thereby reducing the risk of tearing of the tab 222 due to the deformation of the opening structure 231, and thus improving the reliability of the battery cell 2.

The outer side wall 2311, the connecting part 232, the side plate 230, and the separation plate 233 define, in an enclosing manner, a first recess space 2351, and the region of the separation plate 233 opposite to the first recess space 2351 is provided with at least one through hole 237.

The first recess space 2351 is a relatively enclosed space, and therefore, the first recess space 2351 is more prone to electrolyte accumulation. By providing at least one through hole 237 in the region of the separation plate 233 opposite to the first recess space 2351, the risk of electrolyte accumulation in the first recess space 2351 can be reduced.

In some embodiments, one end of the separation plate 233 proximal to the side plate 230 along the second direction is provided with a plurality of through holes 237, the plurality of through holes 237 being spaced apart along the first direction. In this way, the outflow of the electrolyte from the first recess space 2351 is facilitated.

As an example, the accommodating recess 2350 may include the first recess space 2351. That is, the accommodating recess 2350 may be a recess formed by the separation member 23 as a whole.

In some embodiments, the extension direction of the connecting part 232 passes through the center of the opening structure 231.

The center of the opening structure 231 is the geometric center of the opening structure 231. For example, in the case where the cross section of the opening structure 231 is circular, the extension direction of the connecting part 232 passes through the center of the circular cross section. For another example, in the case where the cross section of the opening structure 231 is square, the extension direction of the connecting part 232 passes through the intersection point of the two diagonal lines of the direction cross section.

In the embodiments, the extension direction of the connecting part 232 passes through the center of the opening structure 231, and the connecting part 232 has a relatively long length, thereby providing better structural reinforcement for the opening structure 231, and further reducing the risk of deformation of the opening structure 231.

In some embodiments, the side plate 230 includes two long side walls 2301 and two short side walls 2302, the two long side walls 2301 are located respectively on two sides of the separation plate 233 along the second direction, and the two short side walls 2302 are located respectively on two sides of the separation plate 233 along the first direction, the second direction being the width direction of the separation plate 233; ends parts of two connecting parts 232 proximal to the opening structure 231 are connected separately to the outer side wall 2311 of the opening structure 231, end parts of the two connecting parts 232 distal to the opening structure 231 are connected separately to the two long side walls 2301, and the two connecting parts 232, the two long side walls 2301, one short side wall 2302 of the two short side walls 2302, and the separation plate 233 define, in an enclosing manner, two first recess spaces 2351.

The two connecting parts 232, the two long side walls 2301, one short side wall 2302, and the separation plate 233 define, in an enclosing manner, two first recess spaces 2351, and the position of the separation plate 233 corresponding to the first recess space 2351 is provided with at least one through hole 237. In this way, the electrolyte in the two first recess spaces 2351 can flow out through the through hole 237, thereby reducing the risk of electrolyte accumulation in the first recess space 2351.

The two long side walls 2301, four connecting structures 232, and the separation plate 233 may further define, in an enclosing manner, a second accommodating space, and the second accommodating space is provided with the channel 2330; the region of the separation plate 233 corresponding to the second accommodating space is provided with at least one through hole 237, thereby reducing the risk of electrolyte accumulation in the second accommodating space.

In some embodiments, the two connecting parts 232 are symmetrically disposed along the first direction.

The two connecting parts 232 are connected to the same opening structure 231.

In the embodiments, the two connecting parts 232 are symmetrically disposed along the first direction, and therefore, a smaller number of connecting parts 232 can provide greater support and reinforcement for the opening structure 231.

In the case where two opening structures 231 are disposed along the first direction and two connecting parts 232 are disposed on the outer side wall of one opening structure 231, the separation member 23 is provided with four first recess spaces 2351.

In some embodiments, the extension direction of the connecting part 232 passes through the center of the opening structure 231, one end of the connecting part 232 is connected to the outer side wall 2311, and the other end is connected to the connecting plate 2332 and the long side wall 2301. In this way, the connecting part 232 facilitates the distribution of the applied force to more regions of the separation member 23, thereby further enhancing the stability of the opening structure 231, and reducing the risk of deformation of the opening structure 231.

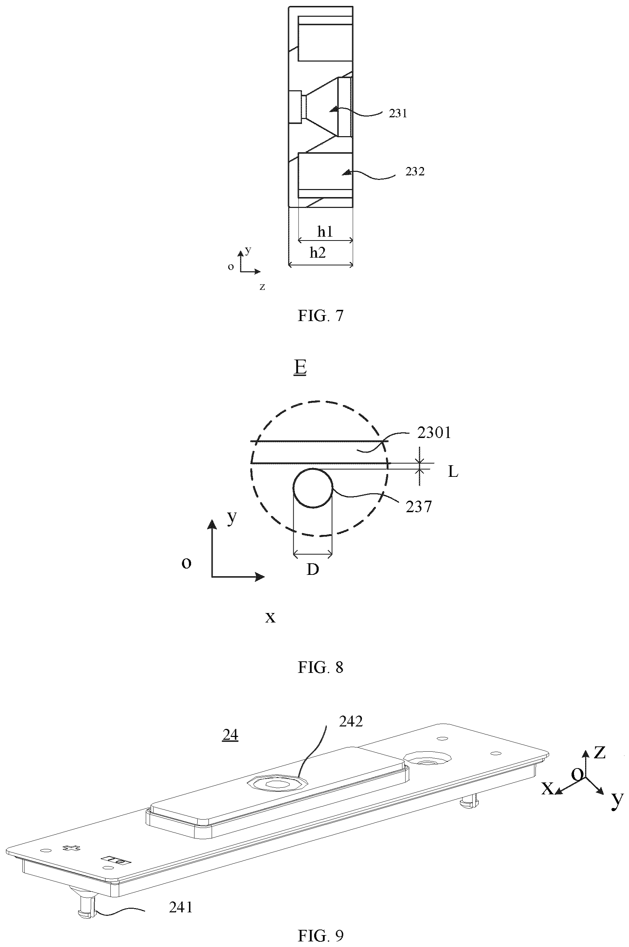

FIG. 7 is a cross-sectional view of the separation member in FIG. 6 along the A-A direction. In some embodiments, with reference to FIG. 7, along the thickness direction of the separation plate 233 (for example, the z direction in FIG. 7), the dimension h1 of the connecting part 232 and the dimension h2 of the opening structure 231 satisfy: 0.5h2 ≤ h1 ≤ h2.

The ratio of h1 to h2 may be 0.5, 0.7, 0.8, 1, or any value within the above range.

h1 may be the maximum dimension of the connecting part 332 along the first direction, and h2 may be the maximum dimension of the opening structure 231 along the first direction. For example, in the case where the opening structure 231 is a groove, h2 is the maximum depth of the groove.

In the case of h1 ≥ 0.5h2, the connecting part 232 has a relatively appropriate dimension along the first direction, thereby providing support and reinforcement for the opening structure 231; and in the case of h1 ≤ h2, along the first direction, the connecting part 232 does not extend beyond the opening structure 231, which can reduce the risk of interference between the connecting part 232 and other components in the battery cell.

In the embodiments, since 0.5h2 ≤ h1 ≤ h2, the connecting part 232 can not only provide relatively strong support and structural reinforcement for the opening structure 231, but also reduce the risk of interference between the connecting part 232 and other components in the battery cell.

As an example, along the first direction, the dimension h1 of the connecting part 232 is the same as the dimension h2 of the opening structure 231.

In some embodiments, the thickness t of the connecting part 232 satisfies: 0.4 mm ≤ t ≤ 2 mm. t may be 0.4 mm, 1 mm, 1.5 mm, 2 mm, or any value within the above range.

The thickness t of the connecting part 232 is the average thickness of the connecting part 232, that is, the average value of the maximum thickness and the minimum thickness. For a well-manufactured connecting part 232, the thickness of the connecting part 232 is uniform, and at different positions along the extension direction of the connecting part 232, the connecting part 232 has the same or substantially the same thickness.

In the case of t ≥ 0.4 mm, the connecting part 232 has an appropriate thickness, thereby providing better support and reinforcement for the opening structure 231; and in the case of t ≤ 2 mm, the manufacturing of the connecting part 232 is facilitated, reducing the risk of surface unevenness of the connecting part 232 and thickness nonuniformity at different positions of the connecting part 232.

In the embodiments, since 0.4 mm ≤ t ≤ 2 mm, the connecting part 232 can not only provide relatively strong support and structural reinforcement for the opening structure 231, but also facilitate the manufacturing of a connecting part 232 with a uniform thickness and an even surface.

FIG. 8 is an enlarged schematic diagram of region E of the separation member in FIG. 6. In some embodiments, with reference to FIGs. 6 to 8, along the second direction, the distance L between the through hole 237 and the side plate 230 satisfies: 0 mm ≤ L ≤ 1 mm, the second direction being the width direction of the separation plate 233.

As an example, with reference to FIGs. 5 and 6, in the case where a plurality of through holes 237 are disposed along the first direction, the distance L is the minimum distance between the edge of the through hole 237 and the long side wall 2301 along the second direction.

L may be 0 mm, 0.2 mm, 0.5 mm, 0.8 mm, 1 mm, or any value within the above range.

In the case of L ≤ 1 mm, the outflow of the electrolyte through the through hole 237 is facilitated; and in the case of L ≥ 0 mm, an appropriate distance is ensured between the through hole 237 and the side plate 230, facilitating the manufacturing of the through hole 237. By setting 0 mm ≤ L ≤ 1 mm, the manufacturing of the through hole 237 is facilitated, and the outflow of the electrolyte through the through hole 237 is also facilitated.

In some embodiments, the area S of the through hole 237 satisfies: 0.19 mm2 ≤ S ≤ 20 mm2, and is, for example, 0.19 mm2, 1.6 mm2, 10 mm2, 20 mm2, or any value within the above range.

The area S of the through hole 237 refers to the area of one through hole 237.

In the case of S ≤ 20 mm2, the cross-sectional area of the through hole 237 is not excessively large, thereby allowing the separation member 23 to exhibit relatively high structural strength; and in the case of S ≥ 0.19 mm2, the cross-sectional area of the through hole 237 is not excessively small, thereby facilitating the outflow of the electrolyte through the through hole 237 and accelerating the outflow speed of the electrolyte from the separation member 23. Therefore, with the above configuration, it is possible to facilitate the outflow of the electrolyte from the separation member 23 while maintaining the structural strength of the separation member 23.

In some embodiments, the shape of the through hole 237 is circular. In this way, the manufacturing of the through hole 237 is facilitated, and the manufacturing complexity of the separation member 23 is reduced.

The shape of the through hole 237 may also be rectangular, elliptical, or irregular, and the embodiments of the present application include but are not limited thereto.

In some embodiments, the diameter D of the through hole 237 satisfies: 0.5 mm ≤ D ≤ 5 mm.

D may refer to the diameter of the through hole 237 in the case where the through hole 237 is a circular through hole.

D may be 0.5 mm, 1 mm, 2 mm, 3 mm, 4 mm, 5 mm, or any value within the above range.

In the case of D ≤ 5 mm, the dimension of the through hole 237 is not excessively large, thereby allowing the separation member 23 to exhibit relatively high structural strength; and in the case of D ≥ 0.5 mm, the dimension of the through hole 237 is not excessively small, thereby facilitating the outflow of the electrolyte through the through hole 237. Therefore, by setting 0.5 mm ≤ D ≤ 5 mm, it is possible to facilitate the outflow of the electrolyte from the separation member 23 while maintaining the structural strength of the separation member 23.

In some embodiments, the separation plate 233 includes a first sub-separation plate 233a and a second sub-separation plate 233b that are spaced apart, and the channel 2330 is formed between the first sub-separation plate 233a and the second sub-separation plate 233b.

The first sub-separation plate 233a and the second sub-separation plate 233b are disposed opposite to each other along the second direction. The second direction is the width direction of the separation member 23, for example, the y direction in FIG. 5.

The first sub-separation plate 233a and the second sub-separation plate 233b can limit the tab 222 (for example, a part of the tab located between the end surface 2221 and the separation plate 233), to reduce shaking and deformation of the tab 222.

FIG. 9 is a schematic structural diagram of a first end cover assembly according to an embodiment of the present application. In an embodiment of the present application, with reference to FIGs. 3, 4, and 9, the shell 20 includes a shell body 21 and a first end cover assembly 24, the first end cover assembly 24 being configured to lid the opening at one end of the shell body 21.

The shell body 21 may be a hollow structure with an opening at one end, and the first end cover assembly 24 lids the opening of the shell body 21.

The first end cover assembly 24 is provided with a protruding structure 241, the protruding structure 241 being snap-fitted to the opening structure 231.

The protruding structure 241 is disposed in the end part region of the first end cover assembly 24 along the first direction, and the protruding structure 241 is disposed corresponding to the opening structure 231 to facilitate snap-fit engagement with the opening structure 231. The protruding structure 241 is a structure protruding toward the direction of the electrode assembly 22.

In the embodiment, the opening structure 231 of the separation member 23 is snap-fitted to the protruding structure 241 of the first end cover assembly 24 to facilitate the fixation between the separation member 23 and the first end cover assembly 24, thereby reducing the risk of tearing of the tab 222 due to the movement of the separation member 23. In addition, the arrangement of the through hole 237 can also reduce the risk of electrolyte accumulation in the separation member 23, thereby achieving full utilization of the electrolyte, and improving the performance of the battery cell 2.

In some embodiments, the shell 20 further includes a second end cover assembly 25, the second end cover assembly 25 being configured to lid an opening at another end of the shell body 21.

The shell body 21 may be a hollow structure with openings at two ends, and the first end cover assembly 24 and the second end cover assembly 25 lid the openings at two ends of the shell body 21, respectively.

Specifically, the first end cover assembly 24 and the second end cover assembly 25 are disposed opposite to each other along the thickness direction of the separation plate 233. The shell body 21 is provided with a first opening 211 and a second opening 212 opposite to each other along the thickness direction of the separation plate 233. The first opening 211 is disposed at one end proximal to the separation member 23 along the thickness direction of the separation plate 233, and the second opening 212 is disposed at one end distal to the separation member 23 along the thickness direction of the separation plate 233. The first end cover assembly 24 is configured to lid the first opening 211, and the second end cover assembly 25 is configured to lid the second opening 212. As an example, as shown in FIG. 3, the second end cover assembly 25 is further provided with a second electrode lead-out member 251, the second electrode lead-out member 251 being opposite in polarity to the first electrode lead-out member 242 disposed on the first end cover assembly 24.

As an example, the second end cover assembly 25 has a structure different from that of the first end cover assembly 24, and the second end cover assembly 25 is not provided with a protrusion configured to cooperate with the opening structure 231.

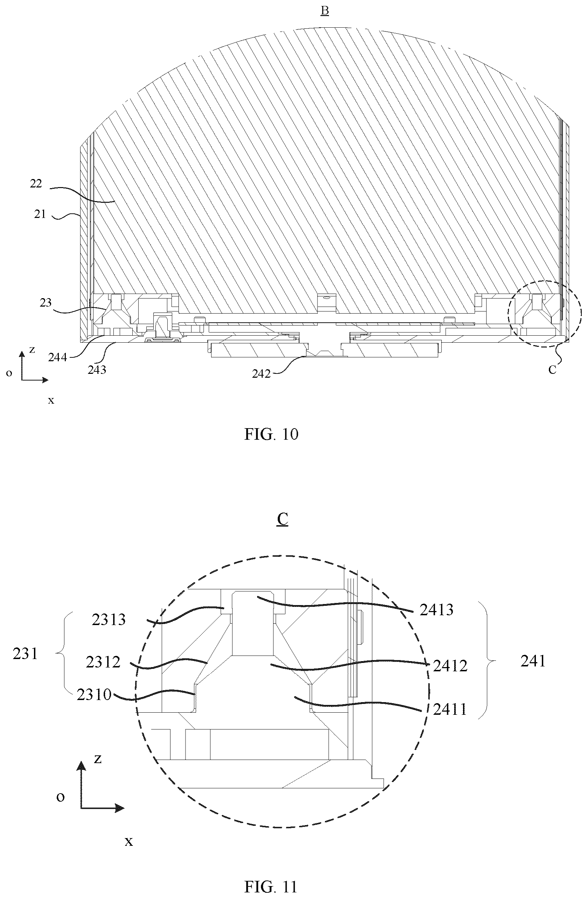

FIG. 10 is a schematic structural diagram of region B of the battery cell in FIG. 3, and FIG. 11 is an enlarged schematic diagram of region C in FIG. 10. With reference to FIGs. 10 and 11, the opening structure 231 is snap-fitted to the protruding structure 241.

As an example, the protruding structure 241 includes a first fixing part 2411, a transition part 2412, and a snap part 2413 connected in sequence. The opening structure 231 includes a second fixing part 2310, a guiding part 2312, and a slot part 2313 connected in sequence. The first fixing part 2411 abuts against the second fixing part 2310 to facilitate the fixation of the protruding structure 241 and the opening structure 231 along the first direction; the snap part 2413 is snap-fitted into the slot part 2313 to facilitate the fixation of the protruding structure 241 and the opening structure 231 along the third direction; the guiding part 2312 helps to guide the protruding structure 241 to enter the opening structure 231; and the transition part 2412 facilitates the connection between the first fixing part 2411 and the snap part 2413.

As an example, along the thickness direction of the wall part (for example, the z direction in FIG. 11), the snap part 2413 does not extend beyond the slot part 2313. In this way, the risk of damaging the electrode assembly 22 caused by the snap part 2413 abutting against the electrode assembly 22 can be reduced.

In some embodiments, with reference to FIG. 10, the first end cover assembly 24 further includes an insulating member 244 and an end cover 243. The end cover 243 is configured to lid an opening at one end of the shell body 21, the insulating member 244 is provided with a protruding structure 241, and the end cover 243 is the wall part of the shell 20.

The insulating member 244 is configured to separate the end cover 243 and the electrode assembly 22, and the insulating member 244 and the protruding structure 241 may be an integrally formed structure.

The first electrode lead-out member 242 is disposed on the end cover 243 of the first end cover assembly 24, and the tab 222 of the electrode assembly 22 passes through the channel 2330 of the separation member 23 and is connected to the first electrode lead-out member 242.

The end cover 243 may be made of metal and capable of conducting electricity, and the insulating member 244 may be a plastic product.

In some embodiments, the battery cell 2 further includes: an insulating film 26, the insulating film 26 being sleeved over the outer surface of the electrode assembly 22 and disposed on the inner side of the shell 20. In this way, the electrode assembly 22 can be separated from the shell 20 to reduce the risk of short circuit caused by the contact between the electrode assembly 22 and the shell 20. In addition, the separation member 23 can be connected to the electrode assembly 22 through the insulating film 26, thereby facilitating the assembly of the battery cell 2.

As an example, the insulating film 26 is a thermoplastic separation film, such as a mylar film.

In a possible implementation, the battery cell 2 further includes a side support plate 27, the side support plate 27 being disposed between the electrode assembly 22 and the inner side of the shell 20. The side support plate 27 can provide support to the electrode assembly 22. In addition, the electrode assembly 22 and the separation member 23 can also be connected through the side support plate 27, thereby facilitating the assembly of the battery cell 2.

The embodiments of the present application provide a battery including the battery cell 2 according to any one of the above embodiments.

The embodiments of the present application provide a battery cell 2. The battery cell 2 includes a first end cover assembly 24, a separation member 23, an electrode assembly 22, and a shell body 21. The shell body 21 is configured to accommodate the electrode assembly 22, the first end cover assembly 24 is configured to lid the first opening 211 of the shell body 21, the first end cover assembly 24 is provided with a first electrode lead-out member 242, and the electrode assembly 22 includes a main body part 221 and a tab 222. The separation member 23 is located between the first electrode lead-out member 242 and the main body part 221 of the electrode assembly 22, the separation member 23 is provided with a channel 2330, and the tab 222 passes through the channel 2330 and is electrically connected to the first electrode lead-out member 242. The separation member 23 includes a separation plate 233 and a side plate 230, the side plate 230 surrounds the outer side of the separation plate 233 and protrudes from the side of the separation plate 233 facing away from the main body part 221. The side plate 230 and the separation plate 233 jointly define an accommodating recess. Moreover, the separation plate 233 includes an inclined plate 2331 and a connecting plate 2332 connecting the inclined plate 2331 and the side plate 230, and the inclined plate 2331 includes an inclined surface 2331a facing away from the main body part 221. Along the thickness direction, the minimum distance between one end of the inclined surface 2331a proximal to the channel 2330 and the main body part 221 is greater than the minimum distance between one end of the inclined surface 2331a distal to the channel 2330 and the main body part 221. In addition, the separation member 23 further includes an opening structure 231 and a connecting part 232, and the outer side wall 2311 of the opening structure 231, the connecting part 232, the side plate 230, and the separation plate 233 define, in an enclosing manner, a first recess space 2351. The connecting plate 2332 and the region of the separation plate 233 corresponding to the first recess space 2351 are provided with at least one through hole 237, separately. With the above configuration, the battery cell 2 exhibits relatively high reliability, and the utilization of the electrolyte in the battery cell 2 is more complete.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell, comprising:
a shell (20), comprising a wall part, wherein the wall part is provided with a first electrode lead-out member (242);
an electrode assembly (22), accommodated in the shell (20), wherein the electrode assembly (22) comprises a main body part (221) and a tab (222) extending from the main body part (221);
a separation member (23), at least partially disposed between the first electrode lead-out member (242) and the main body part (221), wherein:
the separation member (23) comprises a separation plate (233), the separation plate (233) being provided with a channel (2330), and the tab (222) passes through the channel (2330) and is electrically connected to the first electrode lead-out member (242); and
the separation plate (233) is provided with at least one through hole (237), the through hole (237) penetrating through the separation plate (233) along a thickness direction of the separation plate (233).

2. The battery cell according to claim 1, wherein:
the separation member (23) further comprises a side plate (230), the side plate (230) surrounding an outer side of the separation plate (233), and the side plate (230) protruding from a side of the separation plate (233) facing away from the main body part (221) to jointly define an accommodating recess (2350) with the separation plate (233); and
at least a part of the tab (222) is accommodated in the accommodating recess (2350).

3. The battery cell according to claim 2, wherein the through hole (237) is disposed at a position of the separation plate (233) proximal to the side plate (230).

4. The battery cell according to claim 2 or 3, wherein:
the separation plate (233) comprises an inclined plate (2331) and a connecting plate (2332) connecting the inclined plate (2331) and the side plate (230), the inclined plate (2331) comprising an inclined surface (2331a) facing away from the main body part (221);
along the thickness direction, a minimum distance between one end of the inclined surface (2331a) proximal to the channel (2330) and the main body part (221) is greater than a minimum distance between one end of the inclined surface (2331a) distal to the channel (2330) and the main body part (221); and
the connecting plate (2332) is provided with the at least one through hole (237).

5. The battery cell according to any one of claims 2 to 4, wherein the separation member (23) further comprises:
an opening structure (231), disposed in an end part region of the separation plate (233) along a first direction, and extending from a surface of the separation plate (233) facing away from the main body part (221) toward a direction close to the wall part, the first direction being a length direction of the separation plate (233);
a connecting part (232), connected to an outer side wall (2311) of the opening structure (231) and extending to the side plate (230) along a direction away from the opening structure (231),
wherein the outer side wall (2311), the connecting part (232), the side plate (230), and the separation plate (233) define, in an enclosing manner, a first recess space (2351), and a region of the separation plate (233) opposite to the first recess space (2351) is provided with the at least one through hole (237).

6. The battery cell according to claim 5, wherein an extension direction of the connecting part (232) passes through a center of the opening structure (231).

7. The battery cell according to claim 5 or 6, wherein:
the side plate (230) comprises two long side walls (2301) and two short side walls (2302), the two long side walls (2301) being located respectively on two sides of the separation plate (233) along a second direction, the two short side walls (2302) being located respectively on two sides of the separation plate (233) along the first direction, the second direction being a width direction of the separation plate (233);
end parts of two connecting parts (232) proximal to the opening structure (231) are connected separately to the outer side wall (2311) of the opening structure (231), end parts of the two connecting parts (232) distal to the opening structure (231) are connected separately to the two long side walls (2301), and the two connecting parts (232), the two long side walls (2301), one short side wall (2302) of the two short side walls (2302), and the separation plate (233) define, in an enclosing manner, two first recess spaces (2351).

8. The battery cell according to claim 7, wherein the two connecting parts (232) are symmetrically disposed along the first direction.

9. The battery cell according to any one of claims 5 to 8, wherein along the thickness direction of the separation plate (233), a dimension h1 of the connecting part (232) and a dimension h2 of the opening structure (231) satisfy: 0.5h2 ≤ h1 ≤ h2.

10. The battery cell according to any one of claims 5 to 9, wherein a thickness t of the connecting part (232) satisfies: 0.4 mm ≤ t ≤ 2 mm.

11. The battery cell according to any one of claims 2 to 10, wherein along the second direction, a distance L between the through hole (237) and the side plate (230) satisfies: 0 mm ≤ L ≤ 1 mm, the second direction being a width direction of the separation plate (233).

12. The battery cell according to any one of claims 1 to 11, wherein a shape of the through hole (237) is circular.

13. The battery cell according to claim 12, wherein a diameter D of the through hole (237) satisfies: 0.5 mm ≤ D ≤ 5 mm.

14. The battery cell according to any one of claims 1 to 13, wherein the separation plate (233) comprises a first sub-separation plate (233a) and a second sub-separation plate (233b) that are spaced apart, and the channel (2330) is formed between the first sub-separation plate (233a) and the second sub-separation plate (233b).

15. The battery cell according to any one of claims 5 to 14, wherein the shell (20) comprises a shell body (21) and a first end cover assembly (24), the first end cover assembly (24) being configured to lid an opening at one end of the shell body (21), the first end cover assembly (24) being provided with a protruding structure (241), and the protruding structure (241) being snap-fitted to the opening structure (231).

16. The battery cell according to claim 15, wherein the first end cover assembly (24) comprises an end cover (243) and an insulating member (244), the end cover (243) being configured to lid the opening at one end of the shell body (21), the insulating member (244) being provided with the protruding structure (241), and the end cover (243) being the wall part.

17. The battery cell according to claim 15 or 16, wherein the shell (20) further comprises a second end cover assembly (25), the second end cover assembly (25) being configured to lid an opening at another end of the shell body (21).

18. The battery cell according to any one of claims 1 to 17, wherein the battery cell further comprises:
an insulating film (26), sleeved over an outer surface of the electrode assembly (22) and disposed on an inner side of the shell (20).

19. The battery cell according to any one of claims 1 to 18, wherein the battery cell further comprises:
a side support plate (27), disposed between the electrode assembly (22) and an inner side of the shell (20).

20. A battery, comprising: the battery cell according to any one of claims 1 to 19.

21. An electric device, comprising: the battery according to claim 20.
